# EUROPÄISCHE PATENTSCHRIFT

(11) **EP 0 563 079 B1**
(45) Veröffentlichungstag und Bekanntmachung des Hinweises auf die Patenterteilung: **05.03.1997**
(21) Anmeldenummer: 92900174.1
(22) Anmeldetag: 05.12.1991
(51) Int. Cl.: C09G 1/00

(54) **VERFAHREN ZUR HERSTELLUNG VON REINIGUNGS- UND PFLEGEMITTELN**
PROCESS FOR MAKING CLEANING AND MAINTENANCE AGENTS
PROCEDE DE PREPARATION DE PRODUITS DE NETTOYAGE ET D'ENTRETIEN

(30) Priorität: 21.12.1990 DE 4041118
(43) Veröffentlichungstag der Anmeldung: 06.10.1993
(73) Patentinhaber: Henkel Kommanditgesellschaft auf Aktien, 40191 Düsseldorf (DE)
(72) Erfinder: SOLDANSKI, Heinz-Dieter, D-4300 Essen (DE); HOLDT, Bernd-Dieter, D-4000 Düsseldorf (DE); NOGLICH, Jürgen, D-4000 Düsseldorf (DE)
(86) Internationale Anmeldenummer: EP9102322
(87) Internationale Veröffentlichungsnummer: WO9211330

(56) Entgegenhaltungen:
- EP-A- 0 182 282
- EP-A- 0 224 778

## Beschreibung

Die vorliegende Erfindung liegt auf dem Gebiet der Emulsionen von Wachs in Wasser und ihrer Verwendung in Reinigungs- und Pflegemitteln.

Für viele Anwendungszwecke werden Wachse nicht in Substanz oder in Lösung, sondern in Form von Emulsionen in Wasser eingesetzt, die gegenüber den anderen Formen verschiedene Vorteile, wie leichte Applizierbarkeit, schnelles Vermischen mit anderen wäßrigen Phasen und die Abwesenheit brennbarer oder toxischer Lösungsmittel bieten. Da Wachse im allgemeinen nicht selbstemulgierend sind, ist es nötig, zur Herstellung der Wachsemulsionen geeignete Emulgatoren als Hilfsstoffe zuzusetzen. Bei der Auswahl dieser Hilfsstoffe ist man auch heute noch, mangels brauchbarer theoretischer Konzepte, auf empirische Auswahl aus der breiten Palette der bekannten Emulgatoren angewiesen. Vielfach erweisen sich Verbindungen, die bestimmte Wachse hervorragend emulgieren, bei anderen Wachsen als weniger geeignet oder ungeeignet. In vielen Fällen ist man daher noch immer auf Emulgatoren angewiesen, die nicht frei von Nachteilen, wie mangelnde biologische Abbaubarkeit und Unverträglichkeit mit anderen gewünschten Rezepturbestandteilen, sind oder die störende Einflüsse bei der Anwendung der Mittel ausüben, die aus den Emulsionen hergestellt werden. So verwendet man heute sowohl kationische als auch anionische und nichtionische Emulgatoren. Bei den letzteren haben insbesondere die hoch ethoxylierten Fettalkohole und Sorbitanester mit mehr als 20 Mol Ethylenoxid (E0) pro Molekül trotz ihrer schlechten biologischen Abbaubarkeit besondere Bedeutung.

Wegen der Nachteile, die mit den meisten der bekannten und für Wachs geeigneten Emulgatoren verbunden sind, ist man nach wie vor auf der Suche nach Verbindungen, die sich für die Herstellung und Verwendung der Wachsemulsionen besser eignen.

Es wurde jetzt gefunden, daß sich Wachsemulsionen mit ausgezeichneten Eigenschaften für die Weiterverarbeitung zu Reinigungs- und Pflegemitteln gewinnen lassen, wenn man zur Herstellung als Emulgatoren bestimmte Alkylglykoside verwendet.

Gegenstand der Erfindung ist daher ein Verfahren zur Herstellung von Wachs enthaltenden Mitteln zur Reinigung und Pflege von Möbeln, Lack, Leder, Schuhen oder Fußböden, bei dem eine Emulsion von Wachs in Wasser, die als Emulgator ein Alkylglykosid der allgemeinen Formel I

R-O(-G)ₙ I

in der R einen langkettigen Alkylrest mit 8 bis 22 C-Atomen, G einen glykosidisch gebundenen Rest eines Monosaccharids und n einen Wert zwischen 1 und 10 bedeutet, enthält, mit den übrigen Bestandteilen der Mittel vermischt wird.

Das neue Verfahren zeichnet sich dadurch aus, daß die eingesetzten Wacnsemulsionen besonders feinteilig sind und als solche hohe Lagerstabilität aufweisen. Weiterhin ist bemerkenswert, daß sich diese Wachsemulsionen besonders leicht in die übrigen Bestandteile der Reinigungs- und Pflegemittel einarbeiten lassen. Es kommt praktisch nicht zu Unverträglichkeiten mit diesen Bestandteilen, weder bei der Herstellung der Mittel noch im späteren Gebrauch.

Die als Emulgatoren verwendeten Alkylglycosiden gehören zu einer Klasse oberflächenaktiver Substanzen, die seit mehr als 50 Jahren bekannt ist und für die in erster Linie die Verwendung als Netzmittel und Reinigungsmittel auf dem Gebiet der Textilbehandlung vorgeschlagen wurde.

Die Herstellung der Alkylglycoside kann auf an sich bekannten Wegen erfolgen. In diesem Zusammenhang sei nur auf die europäische Patentanmeldung 362 671 hingewiesen, in der auch Literatur zu älteren Verfahren zitiert wird.

Eine für den technischen Maßstab heute bedeutsame Synthese besteht im wesentlichen in der säurekatalysierten Kondensation von Monosacchariden vom Typ der Aldosen (HO-G) mit langkettigen Alkoholen (R-OH), die 8 bis 22, vorzugsweise 10 bis 18 C-Atome enthalten. Unter Wasseraustritt entstehen Alkylglycoside der Formel I

R-O(-G)ₙ

wobei der Wert von n durch die Wahl der Reaktionsbedingungen in weiten Grenzen variiert werden kann. Erfindungsgemäß brauchbar sind Alkylglycoside der Formel I mit n = 1 bis 10, bevorzugt werden Verbindungen mit Werten für n zwischen 1 und 6, inbesondere 1 bis 2. In Produkten, bei denen n größer als 1 ist, stellt n naturgemäß einen statistischen Mittelwert dar.

Bei der Herstellung der Alkylglycoside kann man auch von Oligo- oder Polysacchariden ausgehen, die dann im Verlauf der säurekatalysierten Reaktion zunächst durch Hydrolyse und/oder Alkoholyse zu niederen Bruchstücken depolymerisiert werden ehe sich die Alkylglycoside der Formel I bilden. Auch Gemische verschiedener reduzierender Monosaccharide oder Polysaccharide, die verschiedene Monosaccharideinheiten enthalten, lassen sich als Ausgangsmaterialien verwenden, wobei, falls n größer als 1 ist, entsprechend gemischt zusammengesetzte Alkylglycosidmoleküle entstehen können.

Als Ausgangsmaterialien eignen sich vorzugsweise folgende Monosaccharide: Glucose, Mannose, Galaktose, Arabinose, Apiose, Lyxose, Gallose, Altrose, Idose, Ribose, Xylose und Talose sowie die aus diesen Monosacchariden zusammengesetzten Oligo- und Polysaccharide, beispielsweise Maltose, Lactose, Maltotriose, Hemicellulose, Stärke, Partialhydrolisate der Stärke und Zuckersirup.

Im Rahmen der Erfindung werden allerdings Alkylglycoside bevorzugt, die aus gleichen Monosaccharideinheiten aufgebaut sind. Besonders bevorzugt werden dabei Alkylglycoside, bei denen der Rest (-G) von der Glucose abgeleitet ist. Für diese auch als Alkylglucoside bezeichneten Verbindungen werden entsprechend als Ausgangsmaterialien Glucose, Maltose, Stärke und andere Oligomere der Glucose verwendet.

Der Alkylteil R leitet sich bei der oben beschriebenen Herstellung von langkettigen, gegebenenfalls ungesättigten, vorzugsweise primären Alkoholen ab, die verzweigt sein können, vorzugsweise aber nicht verzweigt sind. Beispiele sind die synthetischen Oxoalkohole mit 9 bis 15 C-Atomen und die aus natürlichen Fettsäuren gewonnenen Fettalkohole mit 8 - 22 C-Atomen. Bevorzugt werden die Fettalkohole mit 10 bis 18 C-Atomen sowie die Oxoalkohole mit 11 bis 15 C-Atomen, insbesondere aber die Fettalkohole mit 12 bis 14 C-Atomen.

Neben den eigentlichen Alkylglykosiden der Formel I enthalten technisch hergestellte Produkte im allgemeinen noch gewisse Anteile an freiem Alkohol R-OH und nicht acetalisierte Saccharide, gegebenenfalls in oligomerisierter Form. Diese technischen Verunreinigungen stören in den meisten Fällen beim beabsichtigten Verwendungszweck nicht. Wird bei der Herstellung der Alkylglykoside von Alkoholgemischen ausgegangen, beispielsweise von Alkoholen auf Basis natürlicher Fette, handelt es sich selbstverständlich auch bei den Alkylglykosiden um Gemische mit entsprechend weiter Bedeutung von R in der Formel I.

In den erfindungsgemäß verwendeten Emulsionen werden die Alkylglykoside im allgemeinen in Mengen von nicht mehr als 15 %, bezogen auf das Gesamtgewicht der Emulsion, eingesetzt. Bevorzugt sind Gehalte von 0,5 bis 10, insbesondere 1 bis 4 Gew.-%. Bei hohen Emulgatorgehalten können die Emulsionen sehr viskos werden, was aber ihre Verwendbarkeit in den meisten Fällen nicht beeinträchtigt.

Als Wachse kommen für die erfindungsgemäß verwendeten Emulsionen alle bekannten Wachse natürlichen und synthetischen Ursprungs, die für die Verwendung in Reinigungs- und Pflegemitteln geeignet sind, in Betracht. Als Beispiele natürlicher Wachse seien Carnauba- und Candelillawachs, als Beispiele synthetischer Wachse die Polyethylen- und Montanesterwachse genannt. Besonders bevorzugt werden Carnauba- und Candelillawachs sowie Montanesterwachse mit Tropfpunkten zwischen 75 und 90 °C und Säurezahlen im Bereich von 15 bis 40.

In den erfindungsgemäß verwendeten Emulsionen können die Wachse in Mengen von bis zu 25 %, bezogen auf das Gesamtgewicht der Emulsion enthalten sein; vorzugsweise liegt der Wachsanteil zwischen 2 und 15 Gew.-%, insbesondere zwischen 2 und 10 Gew.-%.

Zur Herstellung der Emulsionen, die im einfachsten Falle keine Bestandteile außer Wachs, Alkylglykosid und Wasser enthalten, geht man meist von einer vorgefertigten Mischung aus flüssigem Wachs und Emulgator aus und rührt dann entweder diese Mischung in heißes Wasser oder, umgekehrt, heißes Wasser in diese Mischung ein. In beiden Fällen wird die heiße Emulsion anschließend ohne stärkeres Rühren abgekühlt. In manchen Fällen kann es aber auch vorteilhaft sein, zunächst den Emulgator im Wasser zu lösen und das geschmolzene Wachs unter kräftigen Rühren in dieser Lösung zu verteilen. Je nach Konzentration der Bestandteile sind die Emulsionen flüssig bis pastenförmig, gegebenenfalls thixotrop.

Wenn auch Emulsionen, die nur aus Wachs, Alkylglykosid und Wasser bestehen, im Rahmen der Erfindung bevorzugt werden, so können diesen Emulsionen selbstverständlich für besondere Einsatzgebiete auch weitere Hilfsstoffe zugesetzt werden. Zu nennen sind hier in erster Linie zusätzliche Emulgatoren, die aus allen bekannten Klassen stammen können und sowohl nichtionische als auch anionische und kationische Emulgatoren umfassen, und Coemulgatoren, beispielsweise Alkalien, Amine oder lösliche Polymere. Der Anteil dieser zusätzlichen Emulgatoren und Coemulgatoren ist im allgemeinen aber niedriger als der Anteil der Alkylglykoside. Als weitere Hilfsstoffe seien beispielsweise Konservierungsmittel und Substanzen zur Senkung des Gefrierpunktes genannt.

Die Herstellung der Reinigungs- und Pflegemittel erfolgt im einfachsten Falle durch Einrühren der Wachsemulsion in die vorbereitete Mischung der übrigen Komponenten dieser Mittel. Dabei wirkt sich die Überraschend gute Verträglichkeit der Wachsemulsionen auf Basis Alkylglykoside besonders vorteilhaft aus. Es ist aber auch möglich, nur einen Teil der übrigen Bestandteile in Wasser vorzulegen, mit der Wachsemulsion zu vermischen und dann die restlichen Bestandteile der Mittel einzuarbeiten oder von der Wachsemulsion auszugehen und die übrigen Bestandteile nacheinander oder mehr oder weniger gleichzeitig in die Emulsion einzutragen. Diese letztere Variante ist vor allem dann zweckmäßig, wenn die Mittel außer der Wachsemulsion nur wenige Komponenten enthalten. Üblicherweise erfolgt die Herstellung der Mittel bei Raumtemperatur oder wenig erhöhter Temperatur. Die Menge an Wachsemulsion, die zur Herstellung der Mittel verwendet wird, kann weitgehend beliebig gewählt werden und richtet sich nach der Menge an Wachs, die im fertigen Produkt enthalten sein soll.

Möbel- und Lackpflegemittel auf Basis der erfindungsgemäßen Wachsemulsionen enthalten als weitere Bestandteile pflegende Öle, beispielsweise Paraffinöle und/oder Silikonöle, daneben gegebenenfalls Konservierungsmittel, Farbstoffe, Lösungsmittel wie Benzin und antistatisch wirkende Stoffe.

Mittel zur Pflege von Leder auf Basis der erfindungsgemäßen Wachsemulsionen enthalten als weitere Pflegebestandteile Öle, beispielsweise Silikonöle, und/oder filmbildende Polymere, beispielsweiese Polyacrylate und Polyurethane, sowie gegebenenfalls Farbstoffe, Parfüm, Konservierungsmittel, Weichmacher, Lösungsmittel und Konsistenzgeber.

Mittel zur Reinigung und Pflege von Fußböden auf Basis der erfindungsgemäßen Wachsemulsionen enthalten als reinigende Wirkstoffe Tenside, insbesondere aus den Klassen der anionischen und nichtionischen Tenside, daneben gegebenenfalls filmbildende Polymere, beispielsweise Polyacrylate, Styrol-Copolymere und Polyurethane, Weichmacher, wassermischbare Lösungsmittel, Konservierungsmittel, Sequestriermittel, Parfüm und Farbstoff. Bei den Reinigungsmitteln ist die gute biologische Abbaubarkeit der Alkylglykoside als zusätzlicher Vorteil zu werten.

Eine typische Rezeptur eines erfindungsgemäßen Wischpflegemittels für Fußböden hat etwa folgenden Aufbau:

| | |
|---|---|
| Na-C_{12/14}-Fettalkoholsulfat | 2 bis 6 Gew.-% |
| C_{12/14}-Fettalkoholethoxylat (4 EO) | 2 bis 6 Gew.-% |
| Kokosfettsäuremonoethanolamid | 1 bis 3 Gew.-% |
| Wachsemulsion (5 Teile Carnaubawachs, 1,5 Teile Kokosalkylglucosid (n = 1,4), 93,5 Teile Wasser) | 15 bis 45 Gew.-% |
| Konservierungsmittel, Parfüm, Farbstoff | unter 2 Gew.-% |
| Wasser | ad 100 Gew.-% |

### Beispiel 1

### Herstellung einer Emulsion von Carnaubawachs

50 kg Carnaubawachs, geschuppte Form, wurden in einen beheizbaren Rührkessel gegeben, mit 35 kg eines 50 %igen Kokosalkylglucosid (Plantaren (R) APG 600, n = 1,4) versetzt und auf 85 - 90 °C erhitzt. Bei beginnender Wachsschmelze wurde mit dem Rührvorgang begonnen (kräftiger Flügelrührer), um eine homogene Mischung Wachs/Emulgator zu erreichen und um ein lokales Aufschäumen des Emulgators zu verhindern.

Nach Aufschmelzen der gesamten Wachsmenge wurden langsam unter kräftigem Rühren 914 kg heißes Wasser (Mindesttemperatur 95 °C) zugesetzt. Nach vollständiger Zugabe des Wassers wurde die gesamte Emulsion sofort über einen Plattenkühler auf Raumtemperatur abgekühlt, in einen separaten Kessel übergeführt und unter langsamen Rühren 1 kg Glutaraldehyd zur Konservierung zugesetzt.

### Beispiel 2

### Herstellung einer Emulsion von Montanesterwachs

40 kg Hoechstwachs KSL (Montanesterwachs - Tropfpunkt: 80 - 85 °C, Säurezahl: 28 - 38) wurden in einen beheizbaren Rührkessel gegeben mit 28 kg eines 50 %igen Kokosalkylglukosids (Plantaren (R) APG 600, n = 1,4) versetzt und auf 85 - 90 °C erhitzt. Wie in Beispiel 1 wurde bei beginnender Wachsschmelze mit dem Rührvorgang begonnen, um eine homogene Mischung Wachs/Emulgator zu erreichen und um ein lokales Aufschäumen des Emulgators zu verhindern.

Nach Aufschmelzen der gesamten Wachsmenge wurden langsam unter kräftigem Rühren 931 kg heißes Wasser (Temperatur 95 °C) zugesetzt. Nach vollständiger Zugabe des Wassers wurde die gesamte Emulsion sofort über einen Plattenkühler auf Raumtemperatur abgekühlt und in einen separaten Kessel übergeführt.

### Beispiel 3

### Herstellung eines Wischpflegemittels

In einem Mischkessel mit Rührwerk wurden 524,3 kg Wasser von 40 °C vorgelegt. Unter Rühren wurden 15 kg Kokosfettsäuremonoethanolamid (Comperlan ^{(R)} 100) zugesetzt und vollständig gelöst. In diese Lösung wurden dann 300 kg der Wachsemulsion aus Beispiel 1 eingerührt. Danach wurden unter Rühren 37 kg C₁₂₋₁₄-Fettalkohol + 4 E0 (Dehydol ^{(R)} LS 4) und 120 kg C₁₂₋₁₄-Fettalkoholsulfat, 35 %ig (Texapon ^{(R)} LS 35) zugegeben. Abschließend erfolgt unter Rühren die Zugabe von 3 kg Parfüm sowie 0,7 kg Glutaraldehyd. Das flüssige Mittel wurde in Kunststoffkanister abgefüllt.

## Patentansprüche

1. Verfahren zur Herstellung von Wachs enthaltenden Mitteln zur Reinigung und Pflege von Möbeln, Lack, Leder, Schuhen oder Fußböden, bei dem eine Emulsion von Wachs in Wasser, die als Emulgator ein Alkylglykosid der allgemeinen Formel I
R-O(-G)ₙ I
in der R einen langkettigen Alkylrest mit 8 bis 22 C-Atomen, G einen glykosidisch gebundenen Rest eines Monosaccharids und n einen Wert zwischen 1 und 10 bedeutet, enthält, mit den übrigen Bestandteilen der Mittel vermischt wird.

2. Verfahren nach Anspruch 1, bei dem in der Formel I R einen Alkylrest mit 10 bis 18 C-Atomen, G den Glucoserest und n einen Wert zwischen 1 und 6 bedeuten.

3. Verfahren nach einem der Ansprüche 1 oder 2, in dem das Wachs in der verwendeten Emulsion aus der Gruppe Candelillawachs, Carnaubawchs, Montanesterwachs und deren Mischungen ausgewählt ist.

4. Verfahren nach einem der Ansprüche 1 oder 2, bei dem die Wachsemulsion einen Wachsgehalt zwischen 2 und 15 Gew.-%, vorzugsweise zwischen 2 und 10 Gew.-% aufweist.

5. Verfahren nach einem der Ansprüche 1 oder 2, bei dem die Wachsemulsion einen Gehalt an Alkylglycosid zwischen 0,5 und 10 Gew.-%, vorzugsweise zwischen 1 und 4 Gew.-% aufweist.

6. Verfahren nach einem der Ansprüche 1 oder 2, bei dem zur Herstellung des Mittels 15 bis 45 Gew.-% an Wachsemulsion, bezogen auf das fertige Mittel, eingesetzt werden.

7. Mittel zur Reinigung und Pflege von Fußböden, hergestellt nach einem Verfahren gemäß einem der Ansprüche 1 oder 2, enthaltend
2 bis 6 Gew.-% Na-C_{12/14}-Fettalkoholsulfat
2 bis 6 Gew.-% C_{12/14}-Fettalkoholethoxylat
1 bis 3 Gew.-% Kokosfettsäuremonothanolamid
15 bis 45 Gew.-% Wachsemulsion
0 bis 2 Gew.-% Konservierungsmittel, Parfüm, Farbstoff
ad 100 Gew.-% Wasser.

## Claims

1. A process for the production of wax-containing preparations for the cleaning and care of furniture, paint, leather, shoes and floors, in which an emulsion of wax in water containing as emulsifier an alkyl glycoside corresponding to general formula I
R-O(-G)ₙ I
in which R is a long-chain C₈₋₂₂ alkyl radical, G is a glycoside-bonded residue of a monosaccharide and n has a value of 1 to 10,
is mixed with the other constituents of the preparation.

2. A process as claimed in claim 1, in which R in formula I is a C₁₀₋₁₈ alkyl group, G is the glucose residue and n has a value of 1 to 6.

3. A process as claimed in claim 1 or 2, in which the wax in the emulsion used is selected from the group consisting of candelilla wax, carnauba wax, montanic ester wax and mixtures thereof.

4. A process as claimed in claim 1 or 2, in which the wax emulsion has a wax content of 2 to 15% by weight and preferably 2 to 10% by weight.

5. A process as claimed in claim 1 or 2, in which the wax emulsion has an alkyl glycoside content of 0.5 to 10% by weight and preferably 1 to 4% by weight.

6. A process as claimed in claim 1 or 2, in which 15 to 45% by weight of wax emulsion, based on the final preparation, are used in the production of the preparation.

7. Preparations for the cleaning and care of floors produced by the process claimed in claim 1 or 2 and containing
2 to 6% by weight Na C_{12/14} fatty alcohol sulfate
2 to 6% by weight C_{12/14} fatty alcohol ethoxylate
1 to 3% by weight coconut oil fatty acid monoethanolamide
15 to 45% by weight wax emulsion
0 to 2% by weight preservative, fragrance, dye
ad 100% by weight water.

## Revendications

1. Procédé de préparation de produits de lavage et d'entretien des meubles, vernis, cuirs, chaussures ou sols contenant de la cire, dans lequel on mélange avec les autres constituants des produits, une émulsion de cire dans l'eau, qui renferme comme émulsionnant un alkylglycoside de la formule générale I
R-O(-G)ₙ (I)
dans laquelle R représente un radical alkyle à chaîne longue comportant 8 à 22 atomes de C, G correspond à un groupe à liaison glycosidique d'un monosaccharide, et n est une valeur comprise entre 1 et 10.

2. Procédé selon la revendication 1, dans lequel R dans la formule I représente un radical alkyle comportant 10 à 18 atomes de G, G correspond au groupe glucose et n est une valeur comprise entre 1 et 6.

3. Procédé selon une des revendications 1 ou 2, dans lequel la cire dans l'émulsion utilisée est sélectionnée parmi le groupe constitué des cires de candellila, de carnauba, d'ester minéral et des mélanges de celles-ci.

4. Procédé selon une des revendications 1 ou 2, dans lequel l'émulsion de cire présente une concentration en cire comprise entre 2 et 15 % en poids, de préférence entre 2 et 10 % en poids.

5. Procédé selon une des revendications 1 ou 2, dans lequel l'émulsion de cire présente une concentration en alkylglycoside comprise entre 0,5 et 10 % en poids, de préférence entre 1 et 4 % en poids.

6. Procédé selon une des revendications 1 ou 2, dans lequel on met en oeuvre pour la préparation du produit, 15 à 45 % en poids de l'émulsion de cire, par rapport au produit prêt à l'emploi.

7. Produit pour le nettoyage et l'entretien des sols, préparé selon un procédé conforme à l'une des revendications 1 ou 2, contenant
2 à 6 % en poids de sulfate d'alcool gras en C_{12/14}-sel sodique
2 à 6 % en poids d'éthoxylate d'alcool gras en C_{12/14}
1 à 3 % en poids de monoéthanolamide d'acide gras de coco
15 à 45 % en poids d'émulsion de cire
0 à 2 % en poids de conservateur, parfum, colorant
ad 100 % en poids d'eau.
